# EUROPÄISCHE PATENTSCHRIFT

(11) **EP 1 393 241 B1**
(45) Veröffentlichungstag und Bekanntmachung des Hinweises auf die Patenterteilung: **27.07.2005**
(21) Anmeldenummer: 02729901.5
(22) Anmeldetag: 21.05.2002
(51) Int. Cl.: G06K 9/00

(54) **BIOMETRISCHER SENSOR**
BIOMETRIC SENSOR
CAPTEUR BIOMETRIQUE

(30) Priorität: 01.06.2001 DE 10126839
(43) Veröffentlichungstag der Anmeldung: 03.03.2004
(73) Patentinhaber: Infineon Technologies AG, 81669 München (DE)
(72) Erfinder: GRUBER, Klaus, A-8010 Graz (AT); MARIN, Kenneth, E., 85649 Brunnthal (DE); MELZNER, Hanno, 82054 Sauerlach (DE)
(74) Vertreter: Epping, Hermann, Fischer
(86) Internationale Anmeldenummer: PCT/DE2002/001837
(87) Internationale Veröffentlichungsnummer: WO 2002/099731

(56) Entgegenhaltungen:
- EP-A- 0 902 387
- EP-A- 0 942 259
- EP-A- 1 017 009
- WO-A-00/42657
- US-A- 6 069 970

## Beschreibung

Die vorliegende Erfindung betrifft einen biometrischen Sensor, insbesondere einen Fingerabdrucksensor, der mit einem ESD-Schutz und einer Lebenderkennung ausgestattet ist.

Bei einem biometrischen Sensor zur Bilderfassung, z. B. bei einem Fingerabdrucksensor, ist eine Auflagefläche für die betreffende Hautpartie vorhanden, die mit den einzelnen Sensorelementen in einer gerasterten Anordnung versehen ist. Die Hautoberfläche wird von diesen einzelnen Sensorelementen in Bildpunkte aufgeteilt so reproduziert, dass anhand des erfassten Bildes eine Personenerkennung vorgenommen werden kann oder bestimmte Merkmale der Hautoberfläche registriert werden können.

Damit der Sensor zuverlässig arbeitet, ist es erforderlich, sicherzustellen, dass keine elektrostatischen Aufladungen auf die Oberfläche des Sensors gelangen können, die die Funktionsweise des Sensors beeinträchtigen oder den Sensor sogar zerstören können. Ein solcher Schutz gegen elektrostatische Aufladung (ESD, electrostatic damage), wie er an sich z. B. von Chipkarten her bekannt ist, umfasst üblicherweise elektrische Leiter an der Oberfläche des betreffenden Gegenstandes, die so angeordnet sind, dass elektrische Ladungen darin abgeleitet werden können.

Bei einem biometrischen Sensor wird ein ESD-Schutz durch elektrische Leiter in der Auflagefläche bewirkt. Diese Leiter sind vorzugsweise matrixartig als Gitter oder Doppelgitter angeordnet. Die Anordnung wird so vorgenommen, dass sich keine Beeinträchtigung der Messung der einzelnen Sensorelemente ergibt.

Ein weiteres Problem bei biometrischen Sensoren der beschriebenen Art besteht darin, sicherzustellen, dass keine Manipulationen betrügerischer Art mit dem Sensor vorgenommen werden. Bei einem Fingerabdrucksensor muss sichergestellt sein, dass es nicht möglich ist, den Sensor durch Verwendung eines gefälschten Fingers oder eines abgeschnittenen Fingers zu täuschen und so eine Personenidentifizierung vorzunehmen, ohne dass die betreffende Person selbst den Sensor in Betrieb setzt. Dazu ist vorgeschlagen worden, beim Auflegen einer Hautoberfläche auf die Auflagefläche des Sensors festzustellen, dass es sich dabei um einen Körperteil einer lebenden Person handelt.

In der WO 95/26013 sind verschiedene Methoden zur elektronischen Personenidentifikation beschrieben, mit denen zusätzlich zur Aufnahme eines Fingerabdruckes festgestellt werden kann, ob die Person lebt. Zu diesen Methoden gehören die Aufnahme der Pulsfrequenz oder elektrokardiographischer Signale, die Messung des Sauerstoffgehaltes des Blutes, der Hauttemperatur, des Blutdruckes oder mechanischer Eigenschaften der Hautoberfläche.

In der WO 97/14111 ist ein Verfahren zur Lebenderkennung von menschlicher Haut beschrieben, bei dem ein Bereich einer Hautoberfläche in einen vorgegebenen Abstand zu mindestens einem elektrischen Leiter gebracht wird, an den elektrischen Leiter ein veränderliches elektrisches Potential als Signal angelegt wird, mit einer mit diesem Signal durchgeführten elektrischen Messung eine Messfunktion ermittelt wird, indem ein Funktionswert, der von der Impedanz der Hautoberfläche abhängt, ermittelt wird, und die Übereinstimmung dieser Messfunktion mit einer Referenzfunktion geprüft wird.

Aus der europäischen Patentanmeldung EP 0 902 387 ist ein Fingerabdrucksensor bekannt, der für alle Sensorelemente je eine Leiterbahn mit ESD-Schutzfunktion vorsieht, die wiederum alle miteinander verschaltet geerdet sind. D1 weist weiter daraufhin, daß die Matrix von Sensorelementen und die ESD-Schutzleitermatrix in derselben Ebene verlaufen können, aber auch so oder so übereinander angeordnet sein können.

Aus dem amerikanischen Patent US 6 069 970 ist ein Fingerabdrucksensor bekannt, in dem eine Matrix von Impendanzelementen zur Lebenderkennung eines aufgelegten Fingers vorgesehen ist. Das Dokument ervvähnt auch, daß der Sensor einen ESD-Schutz vorsieht. Die geometrische Struktur der Leiterbahnen wird nicht diskutiert.

Aufgabe der vorliegenden Erfindung ist es, einen verbesserten biometrischen Sensor mit ESD-Schutz und Lebenderkennung anzugeben.

Diese Aufgabe wird mit dem biometrischen Sensor mit den Merkmalen des Anspruches 1 gelöst. Ausgestaltungen ergeben sich aus den abhängigen Ansprüchen.

Der erfindungsgemäße biometrische Sensor besitzt eine Auflagefläche zur Bilderfassung und eine zugehörige Ansteuerschaltung. In der Auflagefläche sind Leiterbahnen angeordnet, die teils als ESD-Schutz und teils zur Impedanzmessung vorgesehen sind. Die zum ESD-Schutz vorgesehenen Leiterbahnen sind zur Ableitung elektrischer Ladungen verschaltet, vorzugsweise auf einen Masseanschluss gelegt, während die zur Impedanzmessung vorgesehenen Leiterbahnen an eine zugehörige Messschaltung, die Bestandteil der Ansteuerschaltung sein kann, angeschlossen sind. Vorzugsweise sind die Leiterbahnen in einer obersten Ebene angeordnet und ohne Abdeckung.

Eine solche Anordnung von Leiterbahnen kann insbesondere ein Gitter oder Doppelgitter sein, das z. B. durch Leiterbahnen einer Metallisierung aus Wolfram gebildet wird. Da nur ein Teil der Leiterbahnen der Anordnung für die Impedanzmessung verwendet wird, stehen die übrigen Leiterbahnen für den ESD-Schutz zur Verfügung. Es sind keine zusätzlichen Elektroden für die Impedanzmessung notwendig.

Für die Leiterbahnen des erfindungsgemäßen Sensors kommen verschiedene Anordnungen und Ausrichtungen in Frage, die vorzugsweise in verschiedenen Bereichen der Auflagefläche oder bei verschiedenen Exemplaren des Sensors unterschiedlich gewählt oder in verschiedenen Kombinationen miteinander realisiert werden. Es können verschiedene geometrische Anordnungen der Leiterbahnen verwendet werden. Die unterschiedlichen Bereiche werden vorzugsweise in verschiedenen Kombinationen zusammengeschaltet, um einem Angriff mit statischen Bauelementen entgegenzuwirken.

Es folgt eine genauere Beschreibung von Beispielen des erfindungsgemäßen Sensors anhand der Figuren 1 bis 5.

Die Figuren 1 und 2 zeigen Anordnungen der Leiterbahnen in der Auflagefläche für zwei Beispiele im Schema in Aufsicht.

Die Figuren 3 bis 5 zeigen verschiedene geometrische Anordnungen der für den ESD-Schutz bzw. die Impedanzmessung verwendeten Leiterbahnen.

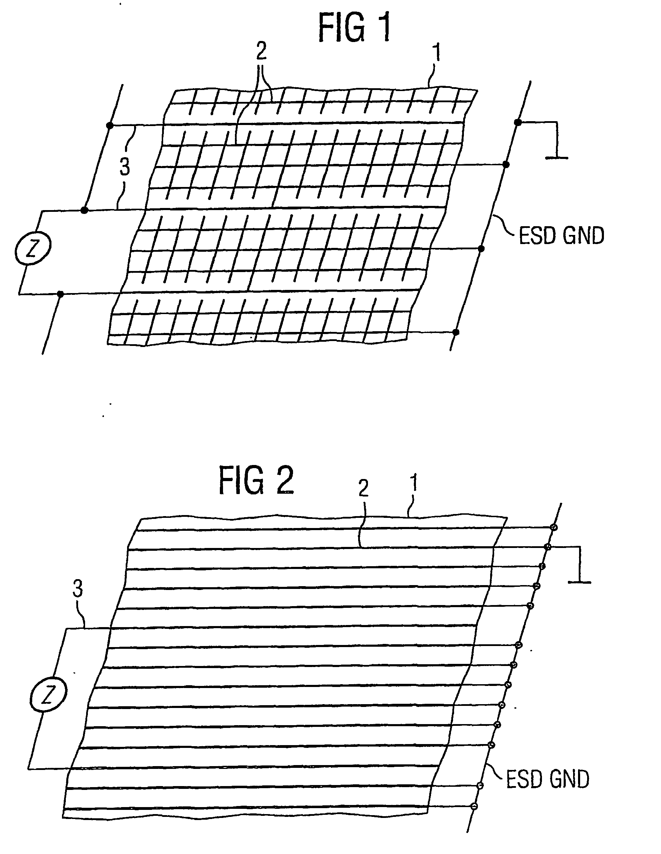

In der Figur 1 ist in einer schrägen Aufsicht im Schema eine Auflagefläche 1 eines biometrischen Sensors zur Bilderfassung dargestellt, in oder vorzugsweise auf der ein Doppelgitter aus Leiterbahnen 2, 3 angeordnet ist. Diese Leiterbahnen sind vorzugsweise zwischen den einzelnen Sensorelementen ausgerichtet, so dass die durch die Sensorelemente erfolgte Bilderfassung zumindest nicht wesentlich beeinträchtigt wird.

Die meisten dieser Leiterbahnen 2 sind für den ESD-Schutz vorgesehen und mit einem gemeinsamen ESD-Anschluss ESD GND verbunden, der vorzugsweise auf Masse gelegt ist. Auf diese Weise wird auf der Auflagefläche angesammelte elektrische Ladung abgeleitet. So wird verhindert, dass hohe elektrische Potenzialdifferenzen auftreten können, die hohe Ströme hervorrufen, durch die der Sensor beschädigt oder zumindest in seiner Funktionsweise beeinträchtigt werden kann.

Bestimmte Leiterbahnen in der Anordnung der eingezeichneten Leiterbahnen sind als Anschlussbahnen 3 für die Impedanzmessung vorgesehen. An diese Anschlussbahnen ist eine zugehörige Messschaltung angeschlossen, die in dem Schema der Figur 1 durch einen Impedanzmesser Z dargestellt ist. Die für die Impedanzmessung vorgesehenen Anschlussbahnen unterbrechen in diesem Beispiel das Doppelgitter der für den ESD-Schutz vorgesehenen Leiterbahnen 2.

In der Figur 2 ist ein weiteres Ausführungsbeispiel dargestellt, das statt des Doppelgitters aus Leiterbahnen 2, 3 ein einfaches Gitter aufweist und im Übrigen der Ausführungsform gemäß Figur 1 entspricht.

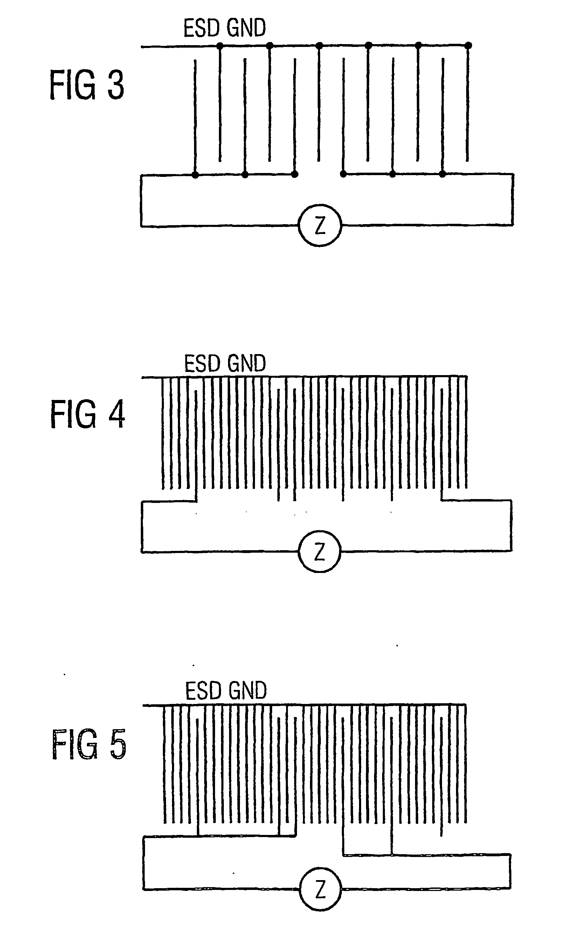

In den Figuren 3 bis 5 sind verschiedene Ausgestaltungen der geometrischen Anordnungen der Leiterbahnen 2 dargestellt. Bei dem Ausführungsbeispiel gemäß der Figur 3 ist dieselbe Anzahl von Leiterbahnen für den ESD-Schutz vorgesehen und dementsprechend mit dem ESD-Anschluss ESD GND verschaltet, wie Leiterbahnen für die Impedanzmessung vorgesehen sind.

Bei dem Ausführungsbeispiel gemäß der Figur 4 ist eine Minderzahl der vorhandenen Leiterbahnen nicht mit dem ESD-Anschluss ESD GND verbunden, sondern dafür vorgesehen, in unterschiedlicher Kombination mit einer für die Impedanzmessung vorgesehenen Messschaltung verbunden zu werden. Bei dem in der Figur 4 als Beispiel dargestellten Exemplar dieser Ausführungsform sind nur zwei in der Nähe des Randes der Anordnung vorhandene Anschlussleiterbahnen mit dem Impedanzmesser verbunden.

Im Unterschied dazu sind bei einem anderen Exemplar dieser Ausführungsform, das in der Figur 5 als weiteres Beispiel gezeigt ist, jeweils mehrere Anschlussleiterbahnen mit je einem Anschluss des Impedanzmessers verbunden. Diese Beispiele sollen nur verdeutlichen, dass je nach dem Anwendungsbereich verschiedene Möglichkeiten in Frage kommen, die vorhandenen Leiterbahnen alternativ für den ESD-Schutz oder die Impedanzmessung zu verwenden. Die geometrische Anordnung und Ausrichtung der Leiterbahnen können an den jeweiligen Anwendungszweck des Sensors angepasst werden. Insbesondere kann die Impedanzmessung zur Lebenderkennung eines aufgelegten Fingers herangezogen werden.

### Bezugszeichenliste

- 1: Auflagefläche
- 2: Leiterbahn
- 3: Anschlussbahn
- ESD GND: ESD-Anschluss
- Z: Impedanzmesser

## Patentansprüche

1. Biometrischer Sensor mit einer Auflagefläche (1) zur Bilderfassung und mit einer Ansteuerschaltung, bei dem
eine erste zu berührende Elektrode für eine Impedanzmessung vorgesehen und mit einer entsprechenden Messschaltung verbur den ist und
eine zweite zu berührende Elektrode als ESD-Schutz vorgesehe und zur Ableitung elektrischer Ladungen verschaltet ist,
**dadurch gekennzeichnet, dass**
die erste Elektrode und die zweite Elektrode in oder auf der Auflagefläche (1) als eine Mehrzahl von Leiterbahnen (2) aus gebildet sind,
die Leiterbahnen (2) als Streifen nebeneinander angeordnet sind und
in einer gitterartigen oder kammartigen Struktur ein Anteil der Leiterbahnen (2) als erste Elektrode und davon getrennt ein restlicher Anteil der Leiterbahnen als zweite Elektrode verbunden ist.

2. Biometrischer Sensor nach Anspruch 1, bei dem
die Leiterbahnen (2) geradlinig parallel zueinander angeordnet sind.

3. Biometrischer Sensor nach Anspruch 1, bei dem
die zweite Elektrode geradlinig parallel zueinander angeordnete Leiterbahnen (2) und quer dazu verlaufende weitere, ebenfalls geradlinig parallel zueinander angeordnete Leiterbahnen umfasst.

4. Biometrischer Sensor nach einem der Ansprüche 1 bis 3, bei dem
die Leiterbahnen (2) zwischen Sensorelementen zur Bilderfassung angeordnet sind.

## Claims

1. Biometric sensor having a bearing area (1) for image acquisition and having a drive circuit, in which
a first electrode to be touched is provided for an impedance measurement and is connected to a corresponding measuring circuit, and
a second electrode to be touched is provided as ESD protection and is connected up for dissipating electrical charges,
**characterized in that**
the first electrode and the second electrode are formed in or on the bearing area (1) as a plurality of conductor tracks (2),
the conductor tracks (2) are arranged next to one another as strips, and
in a gridlike or comblike structure, a portion of the conductor tracks (2) is connected as first electrode and, separately therefrom, a remaining portion of the conductor tracks is connected as second electrode.

2. Biometric sensor according to Claim 1, in which the conductor tracks (2) are arranged rectilinearly parallel to one another.

3. Biometric sensor according to Claim 1, in which
the second electrode comprises conductor tracks (2) that are arranged rectilinearly parallel to one another and further conductor tracks that are likewise arranged rectilinearly parallel to one another and run transversely with respect to the former conductor tracks.

4. Biometric sensor according to one of Claims 1 to 3, in which
the conductor tracks (2) are arranged between sensor elements for image acquisition.

## Revendications

1. Capteur biométrique présentant une surface de contact (1) destinée la détection d'image et comportant un circuit de commande, dans lequel il est prévu une première électrode à toucher pour une mesure d'impédance et reliée à un circuit de mesure correspondant et
une deuxième électrode à toucher est prévue comme protection ESD et est câblée de façon à évacuer les charges électriques,
**caractérisé en ce que**
la première électrode et la deuxième électrode sont conformées dans ou sur la surface de contact (1) sous la forme d'une pluralité de pistes conductrices (2),
les pistes conductrices (2) sont disposées les unes à côté des autres sous la forme de bandes et
dans une structure en réseau ou en peigne, une partie des pistes conductrices (2) sont reliées pour servir de première électrode et, séparément des précédentes, la partie restante des pistes conductrices sont reliées pour servir de deuxième électrode.

2. Capteur biométrique selon la revendication 1, dans lequel les pistes conductrices (2) sont disposées en lignes droites et parallèles.

3. Capteur biométrique selon la revendication 1, dans lequel la deuxième électrode comporte des pistes conductrices (2) disposées en lignes droites et parallèles et d'autres pistes conductrices s'étendant transversalement aux précédentes et également disposées en lignes droites et parallèles.

4. Capteur biométrique selon l'une des revendications 1 à 3, dans lequel les pistes conductrices (2) sont disposées entre des éléments de capteur destinés à la détection d'image.
